(19) Europäisches Patentamt
European Patent Office
Office européen des brevets

(11) **EP 1 547 820 B1**

(12) **EUROPEAN PATENT SPECIFICATION**

(45) Date of publication and mention
of the grant of the patent:
**22.04.2009 Bulletin 2009/17**

(51) Int Cl.:
**B60C 11/11** (2006.01)

(21) Application number: **03771428.4**

(86) International application number:
**PCT/JP2003/009675**

(22) Date of filing: **30.07.2003**

(87) International publication number:
**WO 2004/011282 (05.02.2004 Gazette 2004/06)**

(54) **PNEUMATIC TIRE**

PNEUMATISCHER REIFEN

PNEU

(84) Designated Contracting States:
**DE ES FR GB IT**

(30) Priority: **30.07.2002 JP 2002221348**

(43) Date of publication of application:
**29.06.2005 Bulletin 2005/26**

(73) Proprietor: **Bridgestone Corporation
Tokyo 104-8340 (JP)**

(72) Inventor: **Kaji, Yoshio
Chuo-ku,
Tokyo 104-8430 (JP)**

(74) Representative: **Whalley, Kevin et al
Marks & Clerk
90 Long Acre
London WC2E 9RA (GB)**

(56) References cited:
**EP-A1- 1 283 115      JP-A- 3 178 809
JP-A- 6 166 304      JP-A- 6 166 304
JP-A- 9 058 221      JP-A- 11 263 104**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a pneumatic tire and, more particularly, to a pneumatic tire having a block pattern and being capable of exhibiting an excellent effect of suppressing a heel-and-toe wear.

BACKGROUND ART

Conventionally, in a case in which wear is generated at a trailing edge side of a block in a pneumatic tire having a block pattern which the block surface thereof has a curvature of the same radius as that of a tire outer periphery in a cross section perpendicular to a rotational axis of the tire, an imbalance occurs in ground pressure between a leading edge and the trailing edge, which have been balanced heretofore, thereby generating partial wear which is so-called a heel-and-toe wear.

When such a heel-and-toe wear occurs, not only the appearance degrades, but also the gripping ability of the tire deteriorates.

In order to suppress the heel-and-toe wear, there has been proposed a pneumatic tire in which an outer profile of a cross section perpendicular to a rotational axis of a tire in a block is formed into an arc having a curvature radius smaller than that of an outer profile of the tire (for example, Japanese Patent Application Laid-Open (JP-A) Nos. 6-166304 and 2001-55015).

However, although an effect can be achieved to some extent in a pneumatic tire having a block height which is relatively low in the prior art, a sufficient level of satisfactory cannot be obtained in a pneumatic tire having a block height which is relatively high.

Other pneumatic tire examples are shown in JP-A- 03178809 and JP-A- 09058221.

In view of the aforementioned, an object of the present invention is to provide a pneumatic tire, in which a heel-and-toe wear can be securely suppressed even if the height of each block is high.

DISCLOSURE OF THE INVENTION

As a result of various experiments conducted by the present inventors, in comparison of a block having a low height with a block having a high height, a sliding direction in the vicinity of a trailing edge with respect to a road surface is a direction opposite to a rotational direction of a tire in the low block. In contrast, the sliding direction in the vicinity of the trailing edge with respect to the road surface is identical to the rotational direction of the tire in a high block. Therefore, it was found that the sliding directions at the trailing edges are different from each other between the low block and the high block.

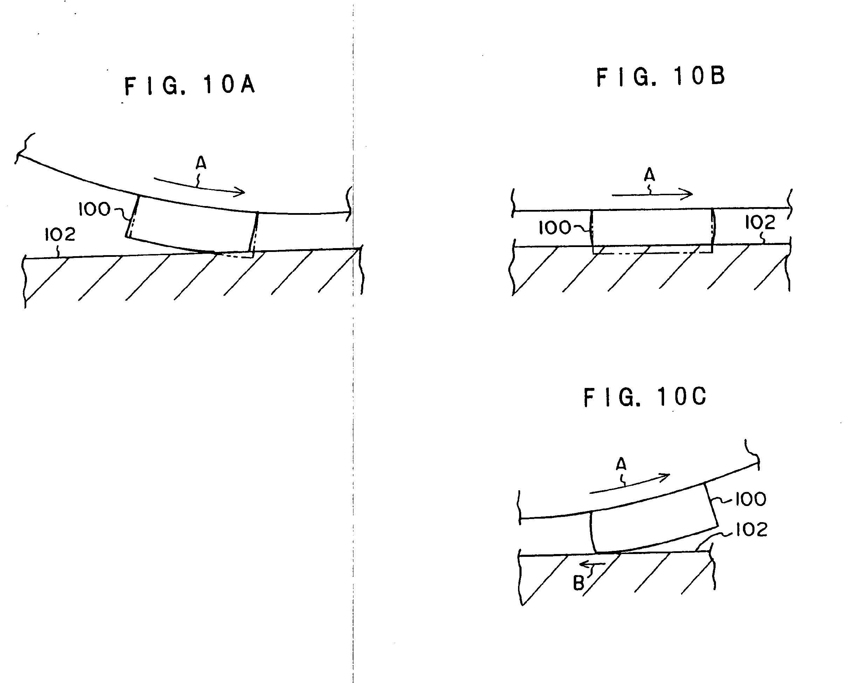

Namely, in the case in which the height of the block is low, as shown in FIG. 10A, bending deformation in a circumferential direction of a low block 100 is small at the time of contacting, and as shown in FIG. 10B, due to the application of pressure caused by a load from above, the low block 100 in the vicinity of the central portion of ground contacting is deformed into a barrel shape.

Further, as shown in Fig. 10C, in the low block 100 at the time of leaving, the vicinity of the trailing edge thereof slides in a direction indicated by arrow B with respect to a road 102, that is, in a direction opposite to the rotational direction of the tire (i.e., in a direction indicated by arrow A).

In other words, in the low block 100, a heel-and-toe wear is generated due to the slide in the vicinity of the trailing edge in the direction opposite to the rotational direction of the tire.

This mechanism of generation of the heel-and-toe wear in the low block 100 has been conventionally known.

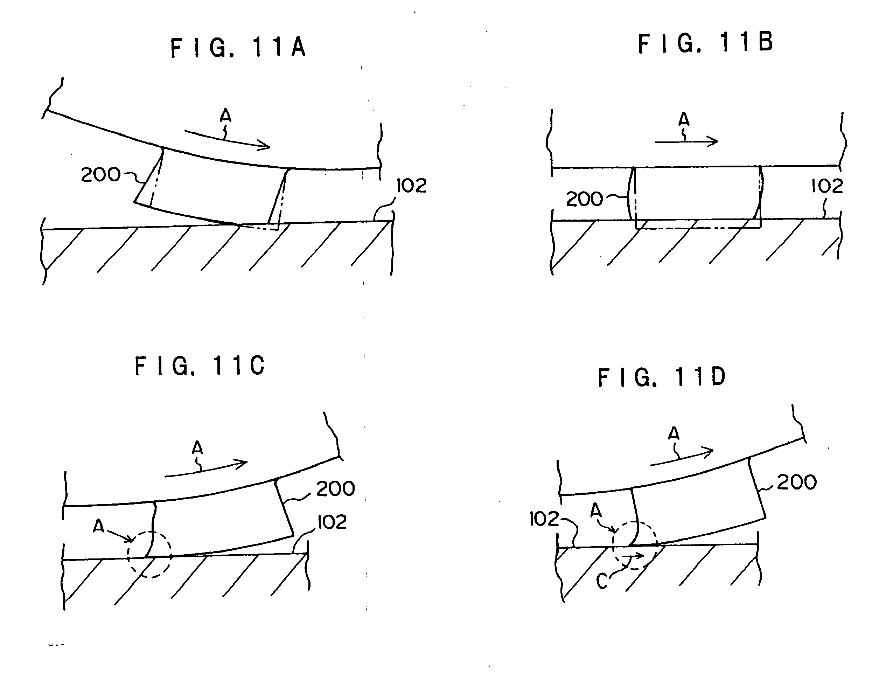

On the other hand, since a block rigidity is relatively degraded in the case of a high block in comparison with the low block, a high block 200 is largely bent and deformed in a circumferential direction at the time of contacting in comparison with the low block (see Fig. 10A), as shown in Fig. 11A.

Note that, the high block 200 is compressed by a load from above in the vicinity of the central portion within the ground contacting plane, and therefore, the high block 200 is also deformed into a barrel shape as a whole in the same manner as the low block, as shown in Fig. 11B. However, the influence of the bending deformation in the circumferential direction also remains.

Furthermore, as shown in Fig. 11C, since the entire high block 200 inclines right before leaving, the leading edge lifts from the road surface (a ground contacting pressure at the leading edge is zero), and the ground contacting pressure at the trailing edge becomes greatest. As a result, the vicinity of the trailing edge (as shown in a dotted circle A in Fig. 11C) is bent and deformed so as to project in a direction opposite to the rotational direction (in the arrow A direction) (note that, in this state, the influence of the bending deformation in the circumferential direction at the time of contacting also remains).

At the time when the high block 200 further rotates and moves away from the road surface, as shown in Fig. 11D, the bent and deformed portion in the vicinity of the trailing edge (the portion indicated by a dotted circle A in Fig. 11D) tends to return to the former state, thereby causing a slide with respect to the road surface 102 in a direction indicated by arrow C (i.e., in the same direction as the rotational direction of the tire).

It has been found this time that in the high block 200, the heel-and-toe wear is generated by the slide in the direction opposite to the slide at the time of contact in the low block 100, that is, by the slide in the same direction as the rotational direction of the tire.

The present inventors have keen examined the shape of the block so as to suppress a local bending deformation in the vicinity of the trailing edge of the block, and thus, have reached the present invention, which is disclosed in claims 1 and 2.

Next, the operation of the pneumatic tire according to claim 1 will be explained.

At the tread surface of the block, a recess dented inward in a tire radial direction beyond a virtual line connecting a first position, at which the block height begins to be gradually reduced, and a block edge of the block in the tire circumferential direction between the first position and the block edge, is provided. Consequently, first, as the block height is low at the leading edge, and the rubber volume in the vicinity of the leading edge is reduced in comparison with a conventional block of which tread surface is formed by only arcs, which have a center of curvature inside of the tire, the ground contacting timing at the time of contact is delayed. As a result, bending deformation of the entire block is suppressed.

Second, as the rubber volume in the vicinity of the leading edge is reduced in comparison with a conventional block of which tread surface is formed by only arcs, which have a center of curvature inside of the tire, the bending deformation generated right before leaving in the vicinity of the trailing edge in the direction opposite to the rotational direction of the tire is suppressed.

That is, according to claim 1, the bending deformation in the vicinity of the trailing edge can be suppressed by the two effects, which are the bending deformation suppressing effect of the entire block at the time of ground contacting, and the local bending deformation suppressing effect right before leaving, as described above.

In this way, at the time of leaving, a slide in the direction opposite to the rotational direction of the tire in the vicinity of the trailing edge is reduced, whereby suppressing a heel-and-toe wear in the case of the height of the block is high.

Next, the operation of the pneumatic tire according to claim 2 will be explained.

The second arcuate portions, which each have the center of curvature outside of the tire, are formed at both sides of the first arcuate portion in the tire circumferential direction at the tread surface of the block. Consequently, first, as the block height is low at the leading edge, and the rubber volume in the vicinity of the leading edge is reduced in comparison with a conventional block of which tread surface is formed by only arcs, which have a center of curvature inside of the tire, the ground contacting timing at the time of contact is delayed. As a result, bending deformation of the entire block is suppressed.

Second, as the rubber volume in the vicinity of the leading edge is reduced in comparison with a conventional block of which tread surface is formed by only arcs, which have a center of curvature inside of the tire, the bending deformation generated right before leaving in the vicinity of the trailing edge in the direction opposite to the rotational direction of the tire is suppressed.

That is, according to claim 2, the bending deformation in the vicinity of the trailing edge can be suppressed by the two effects, which are the bending deformation suppressing effect of the entire block at the time of ground contacting, and the local bending deformation suppressing effect right before leaving, as described above.

In this way, at the time of leaving, a slide in the direction opposite to the rotational direction of the tire in the vicinity of the trailing edge is reduced, whereby suppressing a heel-and-toe wear in the case of the height of the block is high.

Next, the operation of the pneumatic tire according to claims 1 and 2 will be explained.

The effect according to the present invention is exhibited by setting the maximum height H of the block to satisfy the relationship $0.04 \leq H/R \leq 0.06$.

If the maximum height H/R of the block is less than 0.04, the effect according to the present invention cannot be sufficiently exhibited since the block is not very high.

On the other hand, if the maximum height H/R of the block exceeds 0.06, the block will be too high and the bending deformation of the block cannot be sufficiently suppressed.

Note that, the central portion of the tread surface of the block signifies a point at which is a center in a tire axial direction and a center in the tire circumferential direction of the tread surface of the block.

If the amount of depth $d$ of the block is less than 0.02H, a difference in height is too small to achieve the heel-and-toe wear suppressing effect.

On the other hand, if the amount of depth d of the block exceeds 0.07H, there may possibly arise a problem that the distribution of a ground contacting pressure becomes non-uniform or that both end portions in the block circumferential direction do not contact the ground.

The heel-and-toe wear suppressing effect according to the present invention can be securely exhibited without any degradation of other performances.

If the low region satisfying the average block height $hL \leq he + (H-he) \times 0.2$ is not formed from the leading edge for a length of at least H/5 toward the central portion of the block in the circumferential direction and from the trailing edge for a length of at least H/5 toward the central portion of the block in the circumferential direction, the bending deformation of the block at the time of contact cannot be suppressed, or the local bending deformation in the vicinity of the trailing edge cannot be suppressed.

The pneumatic tire according to the present invention is structured as described above, and thus has an excellent effect that the heel-and-toe wear suppressing effect in the high block can be securely exhibited.

BRIEF DESCRIPTION OF THE DRAWINGS

Fig. 1 is a plan view showing a tread of a pneumatic tire according to an embodiment of the present invention.
Fig. 2 is a cross-sectional view perpendicular to a tire rotational axis of a block.
Fig. 3 is a cross-sectional view perpendicular to a tire rotational axis of a block of another embodiment.
Fig. 4 is a cross-sectional view perpendicular to a tire rotational axis of a block of a still another embodiment.
Fig. 5 is a cross-sectional view perpendicular to a tire rotational axis of a block of a still another embodiment.
Fig. 6 is a cross-sectional view perpendicular to the tire rotational axis of the block that explains a difference in shape of a tread surface between the block of the embodiment and a conventional block.
Fig. 7 is a perspective view showing the block of the embodiment (an example of an experimental example).
Fig. 8 is a perspective view showing a block according to a conventional example of the experimental example.
Fig. 9 is a perspective view showing a block according to a comparative example of the experimental example.
Fig. 10A is a side view showing a low block at the time of contact.
Fig. 10B is a side view showing the low block in the vicinity of a ground contacting center.
Fig. 10C is a side view showing the low block at the time of leaving.
Fig. 11A is a side view showing a conventional high block at the time of contact.
Fig. 11B is a side view showing the conventional high block in the vicinity of a ground contacting center.
Fig. 11C is a side view showing the conventional high block right before leaving.
Fig. 11D is a side view showing the conventional high block at the time of leaving.
Fig. 12 is a cross-sectional view perpendicular to a tire rotational axis of a block according to another embodiment.

BEST MODES FOR CARRYING OUT THE INVENTION

A description will be given of an embodiment of a pneumatic tire according to the present invention with reference to the drawings.

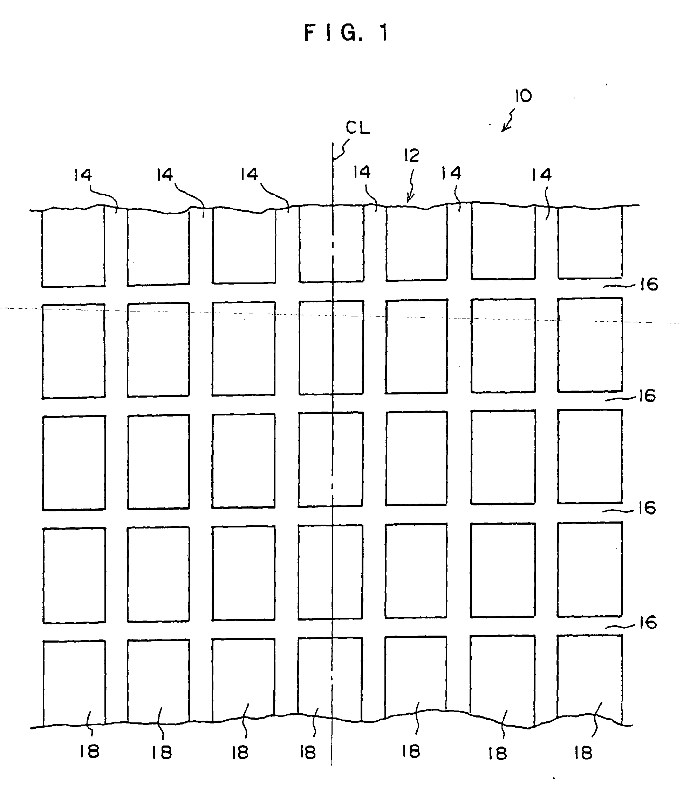

As shown in Fig. 1, a pneumatic tire 10 according to the present embodiment is a tire for a truck and a bus having a tire size of 295/75R22.5. In a tread 12 thereof, there are provided a plurality of rectangular blocks 18 divided by a plurality of circumferential main grooves 14 and a plurality of lateral grooves 16, and form a so-called block pattern.

Note that, the inside structure of the pneumatic tire 10 is the same as the structure of a general radial tire, and therefore, detail description thereof will be omitted.

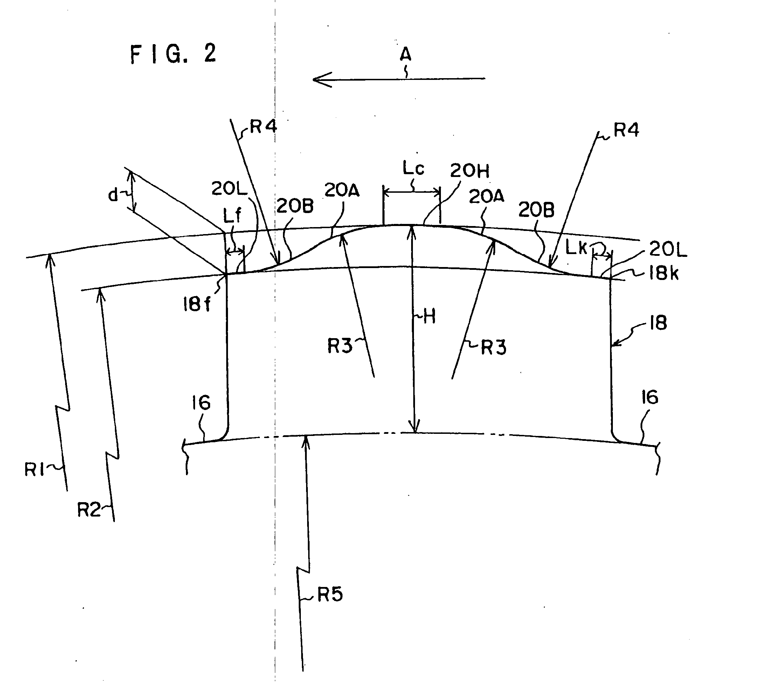

As shown in Fig. 2, when a new block 18 is viewed in a cross section perpendicular to a tire rotational axis, the block 18 is gradually reduced in height from a central portion of a block in a circumferential direction toward a leading edge 18f and a trailing edge 18k. Note that, in Fig. 2, an arrow A indicates a tire rotational direction.

In the block 18 of the present embodiment, a portion having a length Lc in the circumferential direction at the central portion of the block in the circumferential direction is a top portion 20H having a predetermined height (i.e., an arc formed by a curvature radius R1 which passes the central portion of the block in the circumferential direction and which has the tire rotational axis as a center of curvature). Further, a portion having a length Lf in the circumferential direction from the leading edge 18f toward the central portion of the block in the circumferential direction and a portion having a length Lk in the circumferential direction from the trailing edge 18k toward the central portion of the block in the circumferential direction are bottom portions 20L, each having a certain height, (i.e., an arc having a curvature radius R2 which passes the leading edge 18f and the trailing edge 18k, and which has the tire rotational axis as a center of curvature).

A maximum height of the block 18 is designated by H, which is measured from a groove bottom line connecting the respective groove bottoms of each lateral grooves 16 in the tire circumferential direction (i.e., an arc depicted by a chain double-dashed line indicating a circular arc having a radius R5 which has the tire rotational axis as a center of curvature).

Further, the block 18 is a relatively high block, which satisfies the following relationship: $0.04 \leq H/R \leq 0.06$.

As shown in Fig. 2, in the tread surface of the block 18 of the present embodiment, first arcuate portions 20A, which have a radius R3 having a center of curvature inside of the tire, are provided at both sides of the top portion 20H. Further, at each sides of each first arcuate portions 20A, second arcuate portions 20B, which have a radius R4 having a center of curvature outside of the tire, are provided. The top portion 20H, the first arcuate portions 20A, the second arcuate portions 20B and the bottom portions 20L are smoothly connected to one another.

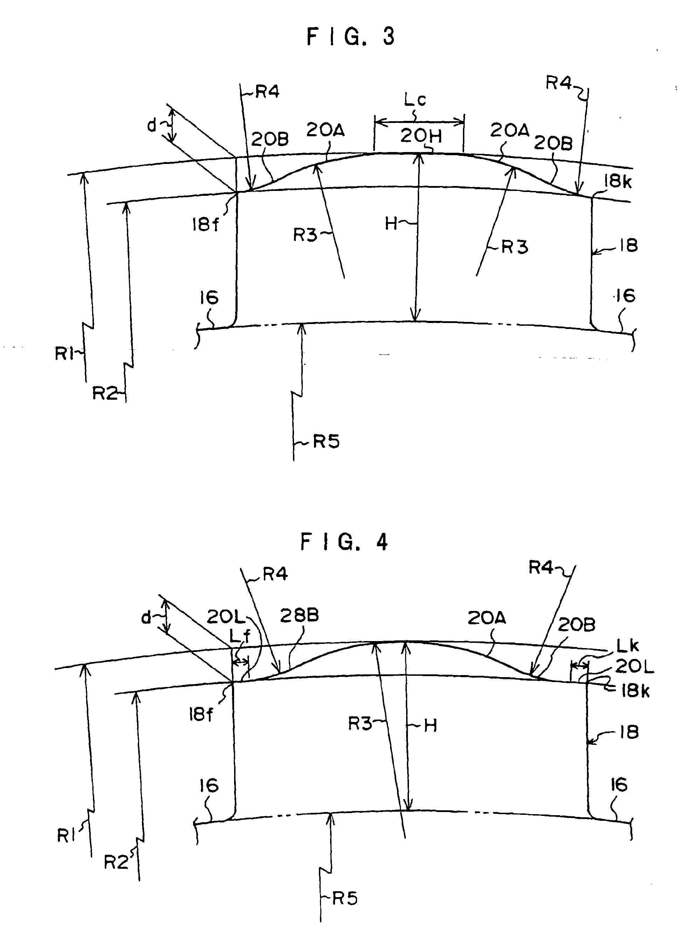

Note that, the present invention is not limited to the above-described structure. In the block 18, as shown in Fig. 3, the top portion 20H may extend relatively long in the tire circumferential direction and the bottom portions 20L, which extend in the tire circumferential direction with a predetermined height, may not be provided. Here, the height of the central portion of the block is constant in the embodiment shown in Fig. 3. However, the height may be gradually reduced toward both sides in the circumferential direction as long as the top portion 20H is approximate to the arc having the curvature radius R1.

Moreover, as shown in Fig. 4, in the block 18, one first arcuate portion 20A may be provided at the central portion of the block 18, and two second arcuate portions 20B and two bottom portions 20L may be provided at both sides of the first arcuate portion 20A (i.e., there is no top portion 20H extending in the circumferential direction in a predetermined height).

Although the height is constant in the vicinity of both ends of the block in the embodiment shown in Fig. 4, the height may be gradually reduced toward both ends in the circumferential direction as long as the bottom portion 20L is approximate to the arc having the curvature radius R2.

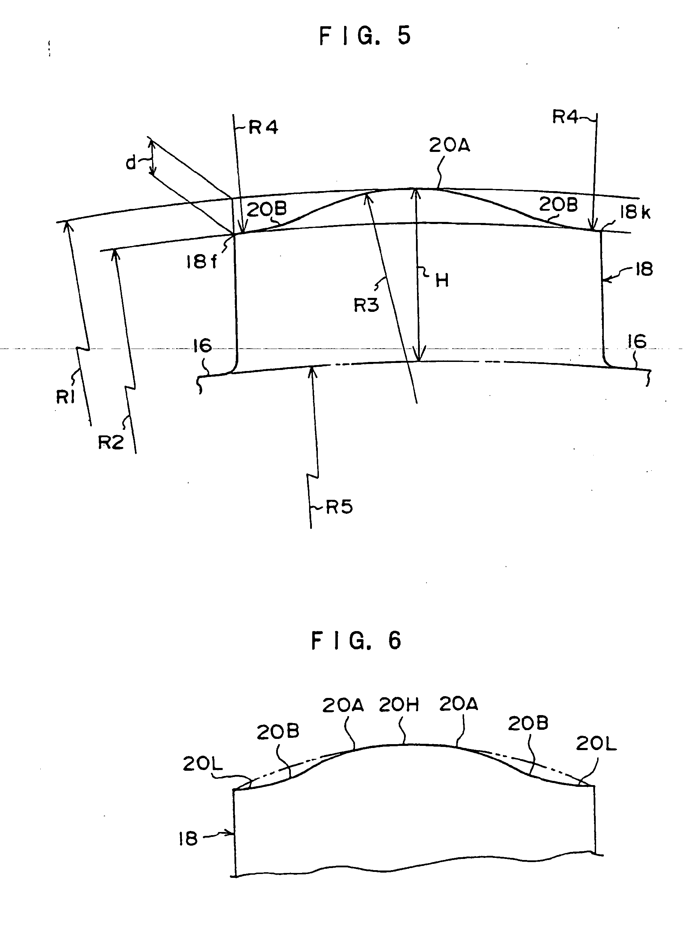

Furthermore, as shown in Fig. 5, in the block 18, one first arcuate portion 20A may be provided at the central portion of the block 18, and only two second arcuate portions 20B may be provided at both sides of the first arcuate portion 20A.

Although not shown, a straight portion may be provided at a portion of the tread surface of the block 18. Further, arcuate portions having a plurality of different curvature radii may be provided at a portion of the tread surface of the block 18.

An amount of depth $d$ satisfies the following relationship: $0.02H \leq d \leq 0.07H$, where $d$ designates the amount of depth obtained by subtracting a block height he at the leading edge 18f and the trailing edge 18k from the maximum height H of the block 18.

Furthermore, a low region satisfying an average block height $hL \leq he + (H-he) \times 0.2$ is formed from the leading edge 18f for a length of at least H/5 toward the central portion of the block in the circumferential direction and from the trailing edge 18k for a length of at least H/5 toward the central portion of the block in the circumferential direction.

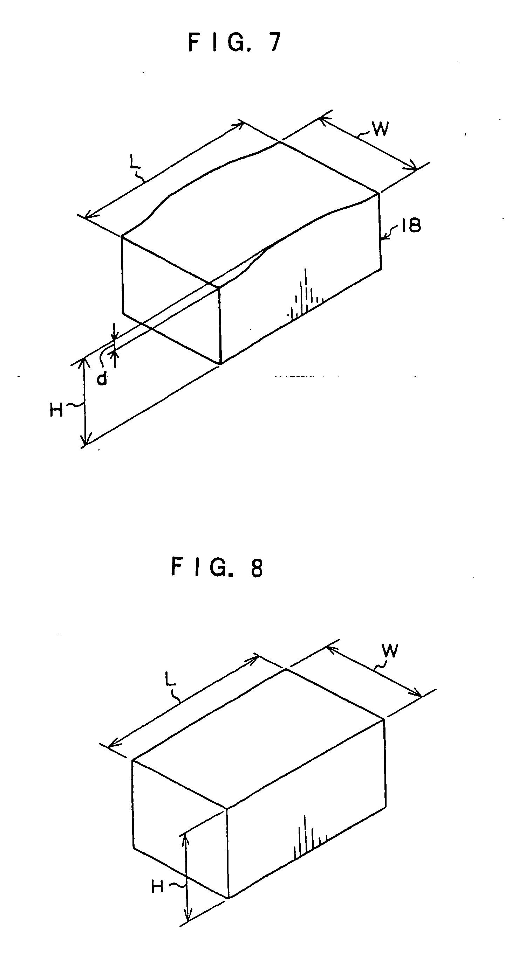

In the block 18 of the present embodiment, the length L in the tire circumferential direction (see Fig. 7) is set to 50 mm, the width W in the tire axial direction (see Fig. 7) is set to 32 mm, the height H is set to 25 mm, the amount of depth $d$ is set to 1 mm, the length Lc of the top portion 20H is set to 10 mm, the curvature radius R3 of the first arcuate portion 20A is set to 112.6 mm, the curvature radius R4 of the second arcuate portion 20B is set to 112.6 mm, and the lengths Lk and Lf of the low portions 20L are set to 5 mm. Here, the radius of the pneumatic tire 10 of the present embodiment ranges from 490 mm (at a shoulder portion) to 503 mm (at a tire equatorial surface CL).

[Operation]

The second arcuate portion 20B having the center of curvature outside of the tire is formed at the leading edge 18f side of the first arcuate portion 20A having the curvature center inside of the tire at the tread surface of the block 18. Consequently, the block height is low at the leading edge 18f and a rubber volume in the vicinity of the leading edge 18f is reduced in comparison with the conventional block (as indicated by a chain double-dashed line in Fig. 6), of which the tread surface is formed of only an arc having the center of curvature inside of the tire, so that a ground contacting timing at the time of contact is delayed. As a result, bending deformation of the entire block is suppressed.

Moreover, in the block 18, the rubber volume in the vicinity of the trailing edge 18k is reduced in comparison with the conventional block, of which the tread surface is formed of only the arc having the center of curvature inside of the tire. Therefore, bending deformation in a direction opposite to the tire rotational direction, which is generated in the vicinity of the trailing edge 18k right before leaving, can be suppressed.

As described above, the pneumatic tire 10 of the present embodiment can suppress the bending deformation in the vicinity of the trailing edge 18k by two effects, which are the bending deformation suppressing effect of the entire block 18 at the time of contacting the ground and the local bending deformation suppressing effect right before leaving, and therefore, can reduce a slide in the direction opposite to the tire rotational direction in the vicinity of the trailing edge 18k at the time of leaving and suppress a heel-and-toe wear from being generated in the case of the relatively high block 18.

Here, if the maximum height H of the block 18 is less than 20 mm, the effect according to the present invention cannot be sufficiently exhibited. On the other hand, if the maximum height H of the block 18 exceeds 30 mm, the block 18 will be too high and the bending deformation of the block 18 cannot be sufficiently suppressed.

If the amount of depth *d* of the block 18 is less than 0.5 mm, a difference in height is too small to achieve the heel-and-toe wear suppressing effect. On the other hand, if the amount of depth *d* of the block 18 exceeds 3.0 mm, there may possibly arise a problem that the distribution of a ground contacting pressure becomes non-uniform or that both ends in the circumferential direction of the block 18 may not contact the ground.

If the low region satisfying the average block height hL ≤ he + (H-he) × 0.2 is not formed from the leading edge 18f for a length of at least 5 mm toward the central portion of the block in the circumferential direction and is not formed from the trailing edge 18k for a length of at least 5 mm toward the central portion of the block in the circumferential direction, there is a possibility that the bending deformation of the block 18 at the time of contact cannot be suppressed, or the local bending deformation in the vicinity of the trailing edge 18k cannot be suppressed.

In the block 18 of the above-described embodiment, the first arcuate portion 20A and the second arcuate portion 20B, which have an relatively great curvature radius, are formed between the top portion 20H and the low portion 20L. However, the respective curvature radii of the first arcuate portion 20A and the second arcuate portion 20B are not limited to those curvature radii in the above-described embodiment, and may be much smaller, or may be 1 mm or less. In some cases, the first arcuate portion 20A and the second arcuate portion 20B may not be provided.

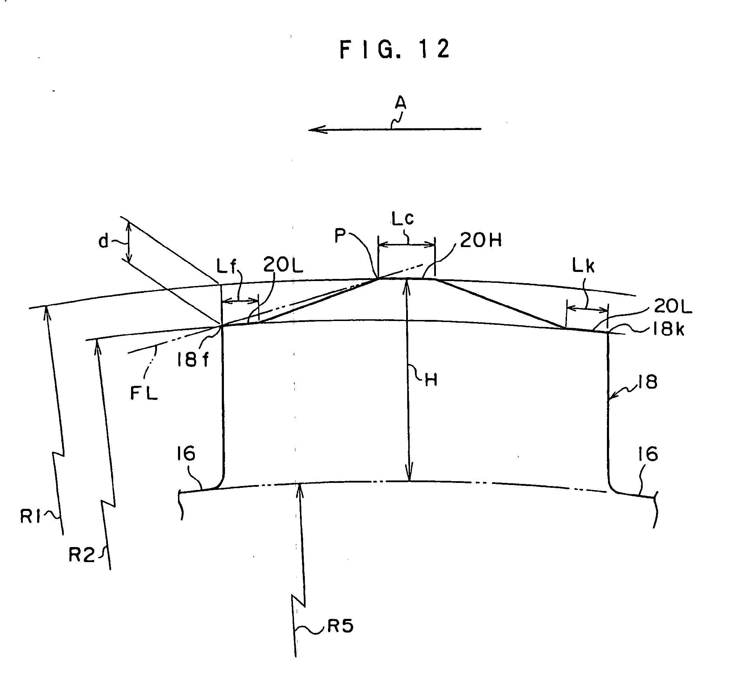

Here, the block 18, which is not provided with a first arcuate portion 20A and a second arcuate portion 20B, is a block of which the top portion 20H and the low portion 20L are substantially linear (actually, are arcs having a tire rotating center as a center of curvature), as viewed in a cross section perpendicular to the tire rotational axis, and the substantially linear top portion 20H and the substantially linear low portion 20L are connected to each other via a straight line (or may be a curved line), as shown in Fig. 12.

Note that, in Fig. 12, reference character FL denotes a virtual line (a straight line), which connects a first position P, at which the height of the block begins to be gradually reduced, and the leading edge 18f of the block 18 (i.e., a block edge of the block in the tire circumferential direction). The tread surface of the block 18 is dented more than the virtual line FL between the first position P and the leading edge 18f (the opposite side also has the same shape).

[Experimental Example 1]

In order to verify the effect of the present invention, a pneumatic tire of conventional example 1, a pneumatic tire of comparative example 1 and a pneumatic tire of example 1, to which the present invention is applied, were prototyped, and were subjected to a wearing test in an actual vehicle.

The size of each of the pneumatic tires was 295/75R22.5, and an inner pressure was set to 650 kPa.

The pneumatic tire of Example 1 was the pneumatic tire in the above-described embodiment.

A block of the pneumatic tire of the conventional example 1 was constantly 50 mm in length L in a circumferential direction, 32 mm in width W in a tire axial direction and 25 mm in height H, as shown in Fig. 8.

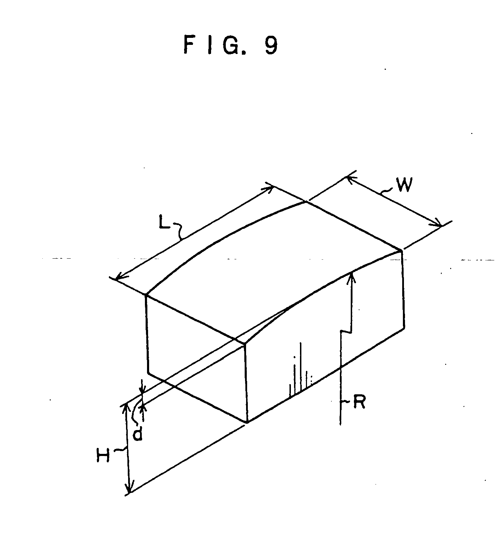

As shown in Fig. 9, a block of the pneumatic tire of the comparative example 1 was 50 mm in length L in a circumferential direction, 32 mm in width W in a tire axial direction and 25 mm in maximum height H, and a tread surface was formed in an arc having a single curvature radius (R) having a center of curvature inside of the tire (as viewed in a cross section perpendicular to the tire rotational axis). An amount of depth d was set to 1 mm.

In the test, each of the tires was mounted to a drive wheel of the actual vehicle of 2D4, and the vehicle was made to travel by 20,000 km. After traveling, a volume of rubber of a shoulder block (i.e., an outermost block in a tire width direction) dissipated due to the heel-and-toe wear was measured.

The results of the test are shown by way of indices where the dissipation rubber quantity of the conventional block having a constant height was regarded as 100. The smaller the numerical value, the more excellent the heel-and-toe wear resistance.

[Table 1]

|  | Volume index of heel-and-toe step portion |
| --- | --- |
| Conventional Example 1 | 100 |
| Comparative Example 1 | 95 |
| Example 1 | 65 |

As a result of the test, it is understood that the pneumatic tire of example 1, to which the present invention was applied, exhibits the excellent heel-and-toe wear suppressing effect more than the pneumatic tires of the conventional example 1 and the comparative example 1.

[Experimental Example 2]

In order to verify the effect of the present invention, a pneumatic tire of conventional example 2 and a pneumatic tire of example 2, to which the present invention was applied, were prototyped in sizes different from those in Experimental Example 1, respectively, and were subjected to an wearing test in an actual vehicle.

The size of each of the pneumatic tires was 46/90R57 (a tire radius ranged from 1719 mm (at a shoulder portion) to 1777 mm (at a tire equatorial surface CL)), and an inner pressure was set to 700 kPa.

A block of the pneumatic tire of the conventional example 2 was constantly 240 mm in length L in the circumferential direction, 200 mm in width W in the tire axial direction and 100 mm in height H.

A block of the pneumatic tire of example 2 was 240 mm in length L in the circumferential direction, 200 mm in width W in the tire axial direction, 100 mm in height H and 4 mm in amount of depth $d$, 48 mm in length Lc at the top portion, 540.5 mm in curvature radius R3 of the first arcuate portion, 540.5 mm in curvature radius R4 of the second arcuate portion, and 24 mm in lengths Lk and Lf at the low portion.

Note that, the test method and the evaluation method were the same as those in Experimental Example 1.

[Table 2]

|  | Volume index of heel-and-toe step portion |
|---|---|
| Conventional Example 2 | 100 |
| Example 2 | 60 |

As a result of the test, it is understood that the pneumatic tire of example 2, to which the present invention was applied, exhibits the excellent heel-and-toe wear suppressing effect more than the pneumatic tire of the conventional example 2.

INDUSTRIAL APPLICABILITY

As described above, the pneumatic tire according to the present invention can be preferably used in a vehicle such as a truck, and is suitable in the case where the heel-and-toe wear is intended to be suppressed.

**Claims**

1. A pneumatic tire (10) including a tread (12) provided with a plurality of blocks (18) divided by a plurality of circumferential main grooves (14) extending in a tire circumferential direction and lateral grooves (16) intersecting the circumferential main grooves, **characterized in that**:

   a block height of each block (18) is gradually reduced from a central portion of the block in the circumferential direction toward a leading edge (18f) and a trailing edge (18k), and at least a profile line of the block has a recess dented inward in a tire radial direction beyond a virtual straight line (FL) connecting a first position (P), at which the block height begins to be gradually reduced, and a block edge (18f) of the block in the tire circumferential direction between the first position and the block edge, as viewed in a cross section perpendicular to a rotational axis of the tire;
   **in that** the following relationship is satisfied:

$$0.04 \leq H/R \leq 0.06$$

   wherein H designates a maximum height of the block, and R designates a tire radius measured at the central portion of the tread surface of the block;
   **in that** the following relationship is satisfied:

$$0.02H \leq d \leq 0.07H$$

   wherein H designates a maximum height of the block, and $d$ is equal to H-he and designates an amount of depth, where he denotes a block height at the leading edge and the trailing edge; and

**in that** a low region satisfying the relationship of an average block height hL ≤ he + (H-he) x 0.2, where H designates a maximum height of the block and he designates a block height at the leading edge (18f) and the trailing edge (18k), is formed from the leading edge for a length of at least H/5 toward the central portion of the block in the circumferential direction and from the trailing edge for a length of at least H/5 toward the central portion of the block in the circumferential direction, when the circumferential length L of the block is greater than 2 x H/5.

2. A pneumatic tire (10) including a tread (12) provided with a plurality of blocks (18) divided by a plurality of circumferential main grooves (14) extending in a tire circumferential direction and lateral grooves (16) intersecting the circumferential main grooves, **characterized in that**:

a block height of each block (18) is gradually reduced from a central portion of the block in the circumferential direction toward a leading edge (18f) and a trailing edge (18k), and at least a profile line of the block includes a first arcuate portion (20A), which is formed at the central portion of the block in the tire circumferential direction and which has a center of curvature inside of the tire, and second arcuate portions (20B), which are formed at both sides of the first arcuate portion in the tire circumferential direction and which have a center of curvature outside of the tire, as viewed in a cross section perpendicular to a rotational axis of a tire;

**in that** the following relationship is satisfied:

$$0.04 \leq H/R \leq 0.06$$

wherein H designates a maximum height of the block, and R designates a tire radius measured at the central portion of the tread surface of the block;

**in that** the following relationship is satisfied:

$$0.02H \leq d \leq 0.07H$$

wherein H designates a maximum height of the block; and *d* is equal to H-he and designates an amount of depth, where he denotes a block height at the leading edge and the trailing edge; and

**in that** a low region satisfying the relationship of an average block height hL ≤ he + (H-he) x 0.2, where H designates a maximum height of the block and he designates a block height at the leading edge (18f) and the trailing edge (18k), is formed from the leading edge for a length of at least H/5 toward the central portion of the block in the circumferential direction and from the trailing edge for a length of at least H/5 toward the central portion of the block in the circumferential direction, when the circumferential length L of the block is greater than 2 x H/5.

**Patentansprüche**

1. Pneumatischer Reifen (10) mit einem Profil (12), welches mit einer Vielzahl von Blöcken ausgestattet ist, die eine Vielzahl von Hauptumfangsnuten (14) aufweisen, die sich in einer Umfangsrichtung des Reifens erstrecken, und laterale Nuten (16), die die Hauptumfangsnuten kreuzen, **dadurch gekennzeichnet,**

**dass** eine Blockhöhe jedes Blocks (18) von einem Hauptabschnitt des Blocks in der Umfangsrichtung in Richtung einer Leitkante (18f) und einer Spurkante (18k) graduell abnimmt, und zumindest eine Profillinie des Blocks eine Aussparung aufweist, die einwärts in einer radialen Reifenrichtung über eine virtuelle gerade Linie (FL) verbeult ist, die eine erste Position (P), bei welcher die Blockhöhe beginnt, graduell abzunehmen, und eine Blockkante (18f) des Blocks in der Reifenumfangsrichtung zwischen der ersten Position und der Blockkante verbindet, wenn in einem Querschnitt senkrecht zu einer Rotationsachse des Reifens betrachtet;

**dass** das folgende Verhältnis erfüllt ist:

$$0.04 \leq H/R \leq 0.06$$

wobei H eine Maximalhöhe des Blocks bezeichnet, und R einen Reifenradius bezeichnet, der an dem Hauptabschnitt der Profiloberfläche gemessen ist;
**dass** das folgende Verhältnis erfüllt ist:

$$0.02H \leq d \leq 0.07H$$

wobei H eine Maximalhöhe des Blocks bezeichnet, und d gleich H-he ist, und eine Tiefenmenge bezeichnet, wobei he eine Blockhöhe an der Leitkante und an der Spurkante bezeichnet; und
**dass** ein niedriger Bereich, der das Verhältnis einer mittleren Blockhöhe hL $\leq$ he + (H-he) x 0.2 erfüllt, wobei H eine Maximalhöhe des Blocks bezeichnet, und he eine Blockhöhe an der Leitkante (18f) und an der Spurkante (18k) bezeichnet, von der Leitkante für eine Länge von zumindest H/5 in Richtung des Hauptabschnitts des Blocks in der Umfangsrichtung und von der Spurkante für eine Länge von zumindest H/5 in Richtung des Hauptabschnitte des Blocks in der Umfangsrichtung gebildet ist, wenn die Umfangslänge L des Blocks größer als 2 x H/5 ist.

**2.** Luftreifen (10) mit einem Profil (12), der mit einer Vielzahl von Blöcken (18) ausgestattet ist, die durch eine Vielzahl von Hauptumfangsnuten (14), die sich in einer Umfangsrichtung des Reifens erstrecken, und laterale Nuten (16), welche die Hauptumfangsnuten kreuzen, aufgeteilt ist, **dadurch gekennzeichnet,**
**dass** eine Blockhöhe jedes Blocks (18) von einem Hauptabschnitt des Blocks in die Umfangsrichtung in Richtung einer Leitkante (18f) und einer Spurkante (18k) graduell abnimmt, und zumindest eine profillinie des Blocks einen ersten bogenförmigen Abschnitt (20a) einschließt, welcher an dem Hauptabschnitt des Blocks in der Umfangsrichtung gebildet ist, und welcher einen Krümmungsmittelpunkt innerhalb des Reifens aufweist, und zweite bogenförmige Abschnitt (20b), welche an beiden Seiten des ersten bogenförmigen Abschnitts in der Umfangsrichtung des Reifens gebildet sind, und welche einen Krümmungsmittelpunkt außerhalb des Reifens aufweisen, wenn in einem Querschnitt senkrecht zu einer Rotationsachse eines Reifens betrachtet;
**dass** das folgende Verhältnis erfüllt ist:

$$0.04 \leq H/R \leq 0.06$$

wobei H eine Maximalhöhe des Blocks bezeichnet, und R einen Reifenradius bezeichnet, der an dem Hauptabschnitt der Profiloberfläche des Blocks gemessen ist;
**dass** das folgende Verhältnis erfüllt ist:

$$0.02H \leq d \leq 0.07H$$

wobei H eine Maximalhöhe des Blocks bezeichnet, und d gleich H-he ist, und eine Tiefenmenge bezeichnet, wobei he eine Blockhöhe an der Leitkante und an der Spurkante bezeichnet; und
**dass** ein niedriger Bereich das Verhältnis einer mittleren Blockhöhe hL $\leq$ he + (H-he) x 0.2 erfüllt, wobei H eine Maximalhöhe des Blocks bezeichnet, und he eine Blockhöhe an der Leitkante (18f) und an der Spurkante (18k) bezeichnet, und von der Leitkante für eine Länge von zumindest H/5 in Richtung des Hauptabschnitts des Blocks in der Umfangsrichtung und von der Spurkante für eine Länge von zumindest H/5 in Richtung des Hauptabschnitt des Blocks in der Umfangsrichtung gebildet ist, wenn die Umfangslänge L des Blocks größer als 2 x H/5 ist

## Revendications

**1.** Pneumatique (10) comprenant une bande de roulement (12) pourvue de multiples blocs (18) séparés par de multiples gorges principales circonférentielles (14) s'étendant dans une direction circonférentielle du pneumatique et gorges latérales (16) croisant les gorges principales circonférentielles, **caractérisé en ce que** :

une hauteur de bloc de chaque bloc (18) diminue progressivement d'une partie centrale du bloc dans la direction circonférentielle vers un bord avant (18f) et un bord arrière (18k), et au moins une ligne de profil du bloc a un évidement s'enfonçant vers l'intérieur dans une direction radiale du pneumatique au-delà d'une ligne droite virtuelle (FL) reliant une première position (P), dans laquelle la hauteur du bloc commence à diminuer progressivement, et un bord (18f) du bloc dans la direction circonférentielle du pneumatique entre la première position et le bord du bloc, comme vu en coupe transversale perpendiculaire à l'axe de rotation du pneumatique ;

**en ce que** la relation suivante est satisfaite :

$$0,04 \leq H/R \leq 0,06$$

dans laquelle H désigne la hauteur maximale du bloc, et R désigne le rayon du pneumatique mesuré à la partie centrale de la surface de la bande de roulement du bloc ;

**en ce que** la relation suivante est satisfaite :

$$0,02H \leq d \leq 0,07H$$

dans laquelle H désigne la hauteur maximale du bloc, et d est égal à H-he et désigne une grandeur de profondeur, où he désigne une hauteur de bloc au bord avant et au bord arrière ; et

**en ce qu'**une région basse satisfaisant à la relation d'une hauteur de bloc moyenne hL $\leq$ he + (H-he) x 0,2, où H désigne la hauteur maximale du bloc et he désigne la hauteur du bloc au bord avant (18f) et au bord arrière (18k), est formée depuis le bord avant sur une longueur d'au moins H/5 vers la partie centrale du bloc dans la direction circonférentielle et depuis le bord arrière sur une longueur d'au moins H/5 vers la partie centrale du bloc dans la direction circonférentielle, lorsque la longueur circonférentielle L du bloc est supérieure à 2 x H/5.

2. Pneumatique (10) comprenant une bande de roulement (12) pourvue de multiples blocs (18) séparés par de multiples gorges principales circonférentielles (14) s'étendant dans la direction circonférentielle du pneumatique et gorges latérales (16) croisant les gorges principales circonférentielles, **caractérisé en ce que** :

une hauteur de bloc de chaque bloc (18) diminue progressivement depuis une partie centrale du bloc dans la direction circonférentielle vers un bord avant (18f) et un bord arrière (18k), et au moins une ligne de profil du bloc comprend une première partie arquée (20A), qui est formée à la partie centrale du bloc dans la direction circonférentielle et qui a un centre de courbure à l'intérieur du pneumatique, et des secondes parties arquées (20B), qui sont formées sur les deux côtés de la première partie arquée dans la direction circonférentielle du pneumatique et qui ont un centre de courbure à l'extérieur du pneumatique, comme vu dans une section transversale perpendiculaire à un axe de rotation du pneumatique ;

**en ce que** la relation suivante est satisfaite :

$$0,04 \leq H/R \leq 0,06$$

où H désigne la hauteur maximale du bloc, et R désigne le rayon du pneumatique mesuré à la partie centrale de la surface de roulement du bloc ;

**en ce que** la relation suivante est satisfaite :

$$0,02H \leq d \leq 0,07H$$

dans laquelle H désigne une hauteur maximale du bloc, et d est égal à H-he et désigne une grandeur de profondeur, où he désigne une hauteur du bloc au bord avant et au bord arrière ; et

**en ce qu'**une région basse satisfaisant à la relation d'une hauteur moyenne du bloc hL $\leq$ he + (H-he) x 0,2, où H désigne la hauteur maximale du bloc et he désigne la hauteur du bloc au bord avant (18f) et au bord arrière (18k), est formée à partir du bord avant sur une longueur d'au moins H/5 vers la partie centrale du bloc dans la direction circonférentielle et à partir du bord arrière sur une longueur d'au moins H/5 vers la partie centrale du bloc dans la direction circonférentielle, lorsque la longueur circonférentielle L du bloc est supérieure à 2 x H/5.

## F I G. 1

FIG. 2

EP 1 547 820 B1

F I G. 3

F I G. 4

## F I G. 5

## F I G. 6

# F I G. 7

# F I G. 8

# F I G. 9

FIG. 10A

FIG. 10B

FIG. 10C

F I G. 11A

F I G. 11B

F I G. 11C

F I G. 11D

EP 1 547 820 B1

# F I G. 1 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6166304 A
- JP 2001055015 A
- JP 03178809 A
- JP 09058221 A